# EUROPÄISCHE PATENTSCHRIFT

(11) **EP 2 996 899 B1**
(45) Veröffentlichungstag und Bekanntmachung des Hinweises auf die Patenterteilung: **10.05.2017**
(21) Anmeldenummer: 14713386.2
(22) Anmeldetag: 27.03.2014
(51) Int. Cl.: B60L 3/00, B60L 3/12, H02H 11/00, B60L 11/18

(54) **VORLADEN EINES KRAFTFAHRZEUG-HOCHVOLTNETZES**
PRECHARGING A MOTOR VEHICLE HIGH-VOLTAGE NETWORK
PRÉCHARGE D'UN RÉSEAU À HAUTE TENSION D'UN VÉHICULE AUTOMOBILE

(30) Priorität: 17.05.2013 DE 102013008586
(43) Veröffentlichungstag der Anmeldung: 23.03.2016
(73) Patentinhaber: Audi AG, 85045 Ingolstadt (DE)
(72) Erfinder: THÖMMES, Marco, 85049 Ingolstadt (DE)
(74) Vertreter: Herbst, Matthias Heinz
(86) Internationale Anmeldenummer: PCT/EP2014/000821
(87) Internationale Veröffentlichungsnummer: WO 2014/183820

(56) Entgegenhaltungen:
- US-A1- 2001 028 571
- US-A1- 2008 092 258

## Beschreibung

Die Erfindung betrifft ein Kraftfahrzeug mit einem Hochvoltnetz und einer Hochvolt-Spannungsquelle, beispielsweise einer Traktionsbatterie. Zu der Erfindung gehört ein Verfahren zum Steuern einer Zuschaltung der Hochvolt-Spannungsquelle an das Hochvoltnetz. Unter Hochvolt-Spannung wird im Zusammenhang mit der Erfindung eine elektrische Gleichspannung von größer als 60 Volt, insbesondere größer als 200 Volt verstanden.

In Kraftfahrzeugen, insbesondere elektrisch angetriebenen Kraftfahrzeugen, kann vorgesehen sein, elektrische Verbraucher mit einer Hochvolt-Spannung zu versorgen. Die Hochvolt-Verbraucher sind hierzu über einen Hochvolt-Zwischenkreis, beispielsweise Stromschienen, mit einer Hochvolt-Spannungsquelle gekoppelt, beispielsweise einer Traktionsbatterie, einem Hochvolt-Generator mit Gleichrichter oder einem Brennstoffzellenstapel. Die Hochvolt-Verbraucher und der Hochvolt-Zwischenkreis bilden zusammen ein Hochvoltnetz, das von der Hochvolt-Spannungsquelle mit elektrischer Leistung versorgt wird. Ein Hochvolt-Verbraucher kann z.B. ein elektrischer Antriebsmotor mit Wechselrichter oder eine Klimaanlage sein.

In solchen Hochvoltfahrzeugen ist in der Regel eine Vorladung zum Aufladen des Hochvolt-Zwischenkreises umgesetzt, um die gegenüber dem Anschluss der Hochvolt-Spannungsquelle an das Hochvoltnetz wirksamen Zwischenkreiskapazitäten aufzuladen. Ohne diese Vorladung würde die Zwischenkreiskapazität durch einen sehr hohen Einschaltstrom geschädigt. Ebenso würden die Hochvolt-Schalter der Hochvolt-Spannungsquelle beim Schließen ohne Vorladung geschädigt. Nach dem Start der Vorladung, die in der Regel über ein Vorladerelais und einen Vorladewiderstand realisiert ist, wird nach einer vorbestimmten Zeitdauer die Hochvolt-Spannung, die von der Hochvolt-Spannungsquelle erzeugt wird, auch im Hochvolt-Zwischenkreis erreicht. Dieses Vorladen dauert in der Regel weniger als eine Sekunde, also beispielsweise wenige 100 Millisekunden. In der Regel wird bei einem Spannungsdelta, also einer Spannungsdifferenz zwischen der Hochvolt-Spannung der Hochvolt-Spannungsquelle und der Zwischenkreisspannung, bereits zwischen der Hochvolt-Spannungsquelle und dem Hochvoltnetz ein zweiter Hauptschalter geschlossen, welcher parallel zum Vorladerelais und Vorladewiderstand liegt. Beispielsweise kann der Hauptschalter bereits bei einem Spannungsdelta von weniger als 10 Volt zugeschaltet werden.

Da die Vorladung sehr schnell sein muss, wird ein sehr kleiner Vorladewiderstand verwendet, der für die Komponenten des Hochvoltnetzes einen unkritischen Wert aufweist. Für eine Person ist der hierbei fließende Vorladestrom jedoch potentiell gefährlich. Grund für die möglichst schnelle Vorladung ist, dass im fehlerfreien Fall der Fahrer nicht unnötig lange warten soll, bevor das Kraftfahrzeug betriebsbereit ist. Im Falle eines Defekts im Hochvoltnetz besteht allerdings die Möglichkeit, dass eine Person mit Leitungen oder Geräten des Hochvoltnetzes Berührungskontakt hat. Insbesondere ist dies in Werkstätten der Fall, wenn beispielsweise nach einem Unfall das Hochvoltnetz überprüft werden muss. Dann bietet der verhältnismäßig kleine Vorladewiderstand keinen Schutz, wenn das beschädigte Hochvoltnetz an die Hochvolt-Spannungsquelle zugeschaltet wird, um beispielsweise eine Probefahrt mit dem beschädigten Kraftfahrzeug zu machen. Ein möglicher Defekt ist beispielsweise, dass ein nicht montierter Schraubkontakt an einer Hochvolt-Komponente dazu führt, dass eine Hochvoltleitung ohne Isolierung frei im Kraftfahrzeug liegt. Wenn eine Person diese Kontakte während der Vorladung berührt, wird die Person einen potentiell gefährlichen elektrischen Schlag bekommen.

Aus der DE 10 2008 012 418 A1 ist ein Hochvoltsystem für ein Kraftfahrzeug bekannt, bei welchem ein Zwischenkreiskondensator über einen Vorladewiderstand aufgeladen werden kann, bevor eine Hochvoltbatterie direkt, das heißt ohne Vorladewiderstand, mit dem Hochvolt-Zwischenkreis verbunden wird. Während des Vorladens wird der Vorladestrom überwacht. Fehlt dieser, wird auf einen fehlenden Kontakt der Hochvolt-Batterie zu dem Hochvoltnetz geschlossen und entsprechend die Vorladung abgebrochen. Nachteilig bei diesem System ist, dass während dieser Messung ein Strom fließen kann, der aufgrund des geringen Vorladewiderstands für eine Person gefährlich ist.

Aus der DE 10 2010 015 312 A1 ist ein Hochvoltsystem für ein Kraftfahrzeug bekannt, das eine Diagnoseeinrichtung mit einer Messeinrichtung zur Messung eines Spannungsverlaufs an einem Zwischenkreiskondensator umfasst. Insbesondere während des Endladevorgangs des Zwischenkreiskondensators wird der Spannungsverlauf gemessen und dahingehend ausgewertet, ob auf eine Fehlfunktion des Hochvoltsystems rückgeschlossen werden kann. Auch bei diesem System treten während der Überprüfung auf Fehlfunktionen elektrische Ströme in dem Hochvoltnetz auf, die für eine Person lebensgefährlich sein können.

Der Erfindung liegt die Aufgabe zugrunde, in einem Kraftfahrzeug mit Hochvoltnetz und Hochvolt-Spannungsquelle einen Defekt im Hochvoltnetz zu erkennen, bevor eine Person gefährdet wird.

Die Aufgabe wird durch ein Verfahren gemäß Patentanspruch 1 und ein Kraftfahrzeug gemäß Patentanspruch 6 gelöst. Vorteilhafte Weiterbildungen der Erfindung sind durch die Unteransprüche gegeben.

Durch die Erfindung wird eine Vorladung für eine Kapazität des Hochvoltnetzes bereitgestellt, wobei die Vorladung um eine Erkennung eines Bordnetzfehlers erweitert ist, also beispielsweise eine Erkennung von nicht angeschlossenen Leitungen oder durchtrennten Leitungen. Unter Vorladen ist das hier bereits beschriebene Aufladen der Kapazität des Hochvoltnetzes mittels eines Vorladestroms der Hochvolt-Spannungsquelle über einen ersten, den Vorladestrom begrenzenden Vorladewiderstand zu verstehen.

In dem erfindungsgemäßen Verfahren wird vor dem Einleiten dieser eigentlichen Vorladephase (mit dem für einen Menschen gefährlichen Vorladestrom) durch eine Steuereinrichtung des Kraftfahrzeugs zunächst zumindest ein Prüfwert für eine elektrische Betriebsgröße des Hochvoltnetzes ermittelt. Das Verfahren beginnt mit dem Empfangen des Zuschaltbefehls, der angibt, dass die Hochvolt-Spannungsquelle dem Hochvoltnetz zugeschaltet werden soll. Dann wird überprüft, welche Kapazität eigentlich tatsächlich an demjenigen Anschluss wirksam ist, über den die Hochvolt-Spannungsquelle mit dem Hochvoltnetz verbunden ist. Als Betriebsgröße wird beispielsweise eine elektrische Spannung überprüft, die an den beiden Kontakten (Plus und Minus) des Anschlusses anliegt. Ist in dem Hochvoltnetz ein Kabel durchtrennt oder hat sich ein Kabel von einer Hochvolt-Komponente gelöst, gibt es keine elektrische Verbindung zwischen der Kapazität dieser Hochvolt-Komponente und dem Anschluss der Hochvolt-Spannungsquelle. Somit ist die am Anschluss der Hochvolt-Spannungsquelle tatsächlich wirksame Kapazität geringer als sie bei intaktem Hochvoltnetz sein müsste. Dies kann dann an dem Prüfwert der Betriebsgröße erkannt werden. Allgemein wird hier also eine Betriebsgröße gewählt, die von einer tatsächlich an dem Anschluss wirksamen Kapazität abhängig ist.

Nur falls der zumindest eine Prüfwert eine vorbestimmte Sicherheitsbedingung erfüllt, wird dann der Vorladestrom der Hochvolt-Spannungsquelle über den ersten Vorladewiderstand zu dem Anschluss hin und in das Hochvoltnetz geführt. Anderenfalls wird der Vorladestrom blockiert. Mit anderen Worten wird die eigentliche Vorladephase gar nicht erst eingeleitet, wenn anhand des zumindest einen Prüfwertes bereits ein Defekt des Hochvoltnetzes erkannt wird.

Das erfindungsgemäße Verfahren weist den Vorteil auf, dass der Prüfwert unter elektrischen Bedingungen ermittelt wird, bei denen für eine Person auch dann keine Lebensgefahr besteht, wenn sie z.B. mit einer elektrischen Leitung des Hochvoltnetzes Berührungskontakt hat. Der zumindest eine Prüfwert kann dabei auch so schnell ermittelt werden, dass sich im fehlerfreien Fall für einen Fahrer des Kraftfahrzeugs keine Verzögerung des Startvorganges ergibt.

Das erfindungsgemäße Kraftfahrzeug weist entsprechend ein Hochvoltnetz und eine über einen Anschluss an das Hochvoltnetz angeschlossene Hochvolt-Spannungsquelle auf, insbesondere die Batteriezellen einer Hochvolt-Batterie. In an sich bekannter Weise ist in dem erfindungsgemäßen Kraftfahrzeug eine Vorladeschaltung bereitgestellt, welche ein erstes steuerbares Schaltelement aufweist, das dazu ausgelegt ist, im elektrisch leitenden Zustand die Hochvolt-Spannungsquelle über einen ersten Vorladewiderstand mit dem Anschluss der Hochvolt-Spannungsquelle an das Hochvoltnetz zu verbinden. Über den ersten Vorladestrom ist die beschriebene, schnelle aber gefährliche Vorladung möglich. Eine Steuereinrichtung ist dazu ausgelegt, in Abhängigkeit von einem Zuschaltbefehl ein erstes Steuersignal für das erste Schaltelement zu erzeugen, so dass also der Vorladestrom von der Hochvolt-Spannungsquelle über den ersten Vorladewiderstand zum Anschluss hin in das Hochvoltnetz fließt. Bei dem erfindungsgemäßen Kraftfahrzeug ist nun diese Steuereinrichtung zusätzlich dazu ausgelegt, eine Ausführungsform des erfindungsgemäßen Verfahrens durchzuführen und hierbei dann entsprechend das erste Steuersignal nur zu erzeugen, falls der zumindest eine Prüfwert die vorbestimmte Sicherheitsbedingung erfüllt.

Entsprechend ergeben sich bei dem erfindungsgemäßen Kraftfahrzeug dieselben Vorteile wie bei dem erfindungsgemäßen Verfahren.

Bei der genannten Sicherheitsbedingung kommt es darauf an, welche Betriebsgröße gemessen wird, das heißt welche Betriebsgröße dem zumindest einen Prüfwert zugrunde liegt. Eine geeignete Sicherheitsbedingung ist, dass der zumindest eine Prüfwert jeweils innerhalb eines Sollwert-Intervalls liegen muss. Das Sollwert-Intervall ist dabei aus zumindest einem Sollwert gebildet, wie er sich ergibt, wenn die tatsächlich wirksame Kapazität einer bestimmungsgemäßen Kapazität des Hochvoltnetzes entspricht, wenn also die Hochvolt-Verbraucher mit ihren jeweiligen Zwischenkreis-Kapazitäten auch tatsächlich über den Zwischenkreis elektrisch mit dem Anschluss verbunden sind. Hat sich ein Kabel gelöst oder ist ein anderer Bordnetzfehler aufgetreten, so verringert sich in der Regel die tatsächlich wirksame Kapazität im Vergleich zur bestimmungsgemäßen Kapazität des Hochvoltnetzes, da eine oder mehrere Zwischenkreiskapazitäten nicht mehr elektrisch mit dem Anschluss der Hochvolt-Spannungsquelle verbunden sind.

Welche Betriebsgröße zum Ermitteln des Prüfwerts genutzt werden kann, hängt von der Bauart des Kraftfahrzeugs ab, in welchem die Erfindung realisiert werden soll. Beispielsweise kann an dem Anschluss eine Wechselspannung erzeugt werden, insbesondere eine hochfrequente Wechselspannung von über 1000 Hertz, so dass auf der Grundlage des dann fließenden Wechselstroms auf die tatsächlich am Anschluss der Hochvolt-Spannungsquelle wirksame Kapazität rückgeschlossen werden kann.

In einer bevorzugten Ausführungsform der Erfindung wird aber zum Ermitteln des zumindest einen Prüfwerts ein Prüfstrom aus der Hochvolt-Spannungsquelle selbst über einen zweiten Vorladewiderstand zum Anschluss geführt. Dieser zweite Vorladewiderstand weist einen größeren Widerstandswert als der erste Vorladewiderstand auf. Diese Ausführungsform weist den Vorteil auf, dass unabhängig von dem Widerstandswert des ersten Vorladewiderstands, über welchen die eigentliche Vorladung möglichst schnell erfolgen soll, nun ein zweiter Vorladewiderstand verwendet wird, dessen Widerstandswert so groß gewählt werden kann, dass sich keine Gefahr für einen Person ergibt, selbst wenn diese eine Leitung des Hochvoltnetzes berührt, während der Prüfstrom fließt. Als der zumindest eine Prüfwert wird bei dieser Ausführungsform des Verfahrens bevorzugt zumindest ein Spannungswert oder ein Stromstärkewert ermittelt.

Zu dieser Ausführungsform des Verfahrens gibt es eine entsprechende Ausführungsform des erfindungsgemäßen Kraftfahrzeugs.

Durch den Prüfstrom wird bevorzugt eine erste, geringe Vorladung der tatsächlich am Anschluss wirksamen Kapazität bewirkt und anhand des zumindest einen Prüfwerts diese erste Vorladung überwacht. Mit erster Vorladung ist hier insbesondere ein Vorladen der tatsächlich wirksamen Kapazität auf einen Spannungswert gemeint, der nur einen Bruchteil, insbesondere weniger als 30 Prozent, bevorzugt weniger als 20 Prozent, der bestimmungsgemäßen Zwischenkreis-Hochvolt-Spannung beträgt, also der von der Hochvolt-Spannungsquelle erzeugten Hochvolt-Spannung. Diese erste Vorladung kann in verhältnismäßig kurzer Zeit abgeschlossen sein, insbesondere in weniger als 500 Millisekunden, bevorzugt weniger als 300 Millisekunden, so dass das Ermitteln des zumindest einen Prüfwerts den Startvorgang nicht merklich verzögert.

Durch den zweiten Vorladewiderstand wird bevorzugt der Prüfstrom auf einen Stromstärkewert begrenzt, der bei gegebener elektrischer Hochvolt-Spannung der Hochvolt-Spannungsquelle kleiner ist als ein für den Menschen gefährlicher Körperstrom. Wie groß dieser Wert für den Körperstrom sein darf, hängt also von der Hochvolt-Spannung ab und kann aus einschlägiger Literatur betreffend die Sicherheit von elektrischen Einrichtungen entnommen werden. Hierzu gibt es entsprechende Normen über zulässige Körperdurchströmungsdauern beziehungsweise die entsprechende Höhe des Körperstroms (IEC60479). An dieser Norm orientiert sich die Auslegung der Widerstandswerte bevorzugt. Wenn sichergestellt ist, über das Widerstandsverhältnis großer zweiter Vorladewiderstand gegen menschlichen Widerstand, das über den Menschen bei einer Berührung eines beispielsweise Kabels des Hochvoltnetzes 60 Volt oder 120 Volt nicht überschritten werden, dann spielt der zeitliche Aspekt sogar keine Rolle mehr. Eine mögliche Berechnung des größeren Vorladewiderstandes, also des zweiten Vorladewiderstandes, ergibt sich, indem der Spannungsabfall über den Menschen (dessen Körper weist einen Widerstand von ca. 1000 Ohm auf) nicht eine berührgefährliche Spannung überschreiten darf. In der Automobilindustrie sind dies in der Regel 60 Volt, in der Elektrotechnik 120 Volt. Bevorzugt beträgt dabei der Stromstärkewert des Prüfstroms weniger als 50 Milliampere, insbesondere weniger als 15 Milliampere, ganz besonders weniger als 10 Milliampere.

Nach Beendigung der ersten Vorladung kann dann für den Fall, dass der zumindest eine Prüfwert die Sicherheitsbedingungen erfüllt, die eigentliche Vorladung über den ersten Vorladewiderstand mit dem geringeren Widerstandswert erfolgen, so dass die Kapazität des Hochvoltnetzes vollends auf den Hochvolt-Spannungswert der Hochvolt-Spannungsquelle aufgeladen wird. Durch Schließen eines weiteren Hauptschalters, kann dann die Hochvolt-Spannungsquelle direkt, das heißt ohne einen Vorladewiderstand, mit dem Hochvoltnetz verbunden werden, so dass ein Betriebsstrom zu den Hochvolt-Verbrauchern geführt werden kann, ohne dass es zu Verlusten in den Vorladewiderständen kommt.

Wie bereits ausgeführt, handelt es sich bei dem zweiten Vorladewiderstand um einen zusätzlichen Schaltungsteil, durch den erreicht wird, dass ein ausreichend großer Widerstand zum Schutz gegen einen elektrischen Schlag bei der Prüfung des Hochvoltnetzes vorhanden ist, ohne dass hierdurch ein Fahrer eine merkbar längere Vorladezeit hinnehmen muss. In der Vorladeschaltung ist also neben dem eigentlichen ersten Vorladewiderstand mit einem verhältnismäßig kleinen Widerstandswert zusätzlich ein zweiter Vorladewiderstand mit größeren Widerstandswert zugeschaltet, so dass über diesen ein ungefährlicher Prüfstrom fließt, mit dem festgestellt werden kann, ob das Hochvoltnetz überhaupt angeschlossen und ohne Fehler ist. Im Zusammenhang mit der Erfindung ist unter Vorladewiderstand zu verstehen, dass es sich um ein einziges, diskretes Bauteil handelt oder aber um eine Anordnung mehrerer elektrischer Bauteile, die zusammen den Vorladewiderstand mit dem vorbestimmten Widerstandswert in Bezug auf Anschlussklemmen dieses Bauteile-Netzwerks aufweisen.

Das erste Schaltelement, mit welchem die eigentliche Vorladephase (großer Vorladestrom) eingeleitet wird, ist dabei dazu ausgelegt, im elektrisch leitenden Zustand einen von der Hochvolt-Spannungsquelle zu dem Anschluss der Hochvolt-Spannungsquelle fließenden Strom größtenteils oder vollständig an dem zweiten Vorladwiderstand vorbeizuführen.

Hierbei gibt es zwei bevorzugte Ausführungsformen. In einer Ausführungsform des erfindungsgemäßen Kraftfahrzeugs bilden das erste Schaltelement und der erste Vorladewiderstand einen ersten Schaltungszweig und das zweite Schaltelement und der zweite Vorladewiderstand einen zweiten Schaltungszweig, wobei der erste und der zweite Schaltungszweig die Hochvolt-Spannungsquelle mit dem Anschluss unabhängig voneinander koppeln. Beispielsweise können also die beiden Schaltungszweige parallel zueinander geschaltet sein. Hierdurch ergibt sich der Vorteil, dass einem Defekt des Prüfzweiges, also des Schaltungszweiges mit dem zweiten Schaltelement und dem hochohmigen, zweiten Vorladewiderstand, immer noch eine (ungeprüfte) Vorladung des Hochvoltnetzes möglich ist, das Kraftfahrzeug also betriebsbereit bleibt.

In einer alternativen Ausführungsform sind der erste Vorladewiderstand und der zweite Vorladewiderstand gemeinsam über das erste Schaltelement mit der Hochvolt-Spannungsquelle oder dem Anschluss gekoppelt. Hierdurch ergibt sich der Vorteil, dass nur das erste Schaltelement als galvanisch entkoppelndes Schaltelement ausgelegt sein muss. Das zweite Schaltelement zum Beenden der Prüfphase und Einleiten der eigentlichen Vorladephase, kann dann beispielsweise auch ein Halbleiter-Schaltelement, wie beispielsweise ein IGBT (insulated gate bipolar transistor), sein.

Das Zuschalten der Hochvolt-Spannungsquelle an das Hochvoltnetz erfolgt bei dem erfindungsgemäßen Kraftfahrzeug dabei bevorzugt wie folgt: Die Steuereinrichtung ist dazu ausgelegt, in Abhängigkeit von dem Zuschaltbefehl, den es beispielsweise über einen CAN-Bus (CAN - Controller Area Network) empfangen kann, zunächst durch Erzeugen eines zweiten Steuersignals das zweite Schaltelement der Vorladeschaltung in einen elektrisch leitenden Zustand zu schalten, ohne hierbei das erste Steuersignal (zum Einleiten der eigentlichen Vorladung mit dem gefährlichen Vorladestrom) zu erzeugen. Hierdurch wird dann der Prüfstrom aus der Hochvolt-Spannungsquelle über den zweiten Vorladewiderstand zu dem Anschluss geführt. Erfüllt dann der zumindest eine Prüfwert, z.B. nach einer vorbestimmten Prüfzeit, die Sicherheitsbedingungen, kann das erste Steuersignal erzeugt werden, wodurch dann das erste Schaltelement geschaltet und der eigentliche Vorladestrom über das den ersten Vorladewiderstand in das Hochvoltnetz geführt wird. Eine Sicherheitsbedingung kann beispielsweise sein, dass sich nach der vorbestimmten Zeitdauer, beispielsweise 200 Millisekunden oder 300 Millisekunden oder 400 Millisekunden, in dem Hochvoltnetz eine elektrische Spannung aufgebaut haben muss, die kleiner als ein vorbestimmter Schwellenwert ist, beispielsweise 60 Volt oder 120 Volt. Ist dies nicht der Fall, ist davon auszugehen, dass die tatsächlich am Anschluss wirksame Kapazität deutlich kleiner als die bestimmungsgemäße Kapazität des Hochvoltnetzes ist.

Im Folgenden ist die Erfindung noch einmal anhand eines konkreten Ausführungsbeispiels erläutert. Hierzu zeigt:
- Fig. 1: eine schematische Darstellung einer Ausführungsform des erfindungsgemäßen Kraftfahrzeugs,
- Fig. 2: ein Diagramm mit zeitlichen Verläufen von elektrischen Betriebsgrößen, wie sie sich bei einer Vorladung gemäß dem Stand der Technik ergeben,
- Fig. 3: ein Diagramm mit zeitlichen Verläufen von elektrischen Betriebsgrößen, wie sie sich bei einer Ausführungsform des erfindungsgemäßen Verfahrens ergeben, wenn kein Bordnetzfehler vorliegt,
- Fig. 4: ein Diagramm mit zeitlichen Verläufen von einer elektrischen Betriebsgröße, wie sie sich gemäß einer Ausführungsform des erfindungsgemäßen Verfahrens ergibt, wenn ein Bordnetzfehler vorliegt,
- Fig. 5: eine Vorladeschaltung gemäß einer Ausführungsform des erfindungsgemäßen Kraftfahrzeugs und
- Fig. 6: eine alternative Vorladeschaltung gemäß einer anderen Ausführungsform des erfindungsgemäßen Kraftfahrzeugs.

Die Beispiele stellen bevorzugte Ausführungsformen der Erfindung dar.

Bei den folgenden erläuterten Ausführungsbeispielen stellen die beschriebenen Komponenten der Ausführungsformen und die beschriebenen Schritte der Verfahren jeweils einzelne, unabhängig voneinander zu betrachtende Merkmale der Erfindung dar, welche die Erfindung auch jeweils unabhängig voneinander weiterbilden und damit auch einzeln oder in einer anderen als der gezeigten Variation als Bestandteil der Erfindung anzusehen. Des Weiteren sind die beschriebenen Ausführungsformen auch durch weitere der beschriebenen Merkmale der Erfindung ergänzbar.

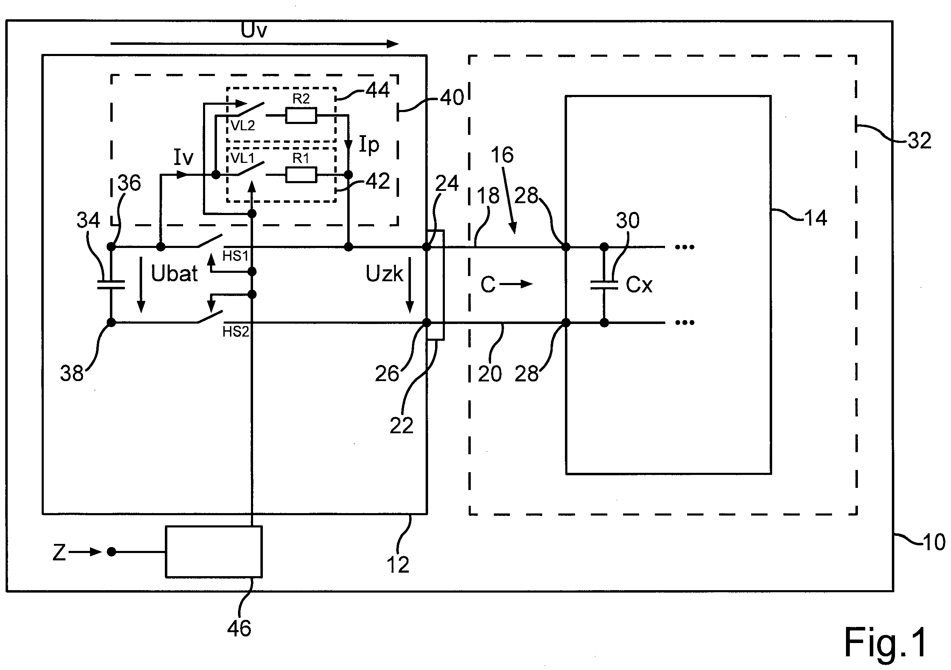

In Fig. 1 ist ein Kraftfahrzeug 10 gezeigt, bei dem es sich beispielsweise um einen Kraftwagen, insbesondere einen Personenkraftwagen, handeln kann. Das Kraftfahrzeug 10 weist eine Hochvolt-Spannungsversorgung 12 auf, bei der es sich beispielsweise um eine Hochvoltbatterie handeln kann. Des Weiteren weist das Kraftfahrzeug 10 eine oder mehrere Hochvolt-Komponenten auf, wobei in Fig. 1 nur eine einzelne Hochvolt-Komponente 14 gezeigt ist. Bei der Hochvolt-Komponente kann es sich beispielsweise um einen elektrischen Antriebsmotor des Kraftfahrzeugs 10 handeln. Die Spannungsversorgung 12 und die Hochvolt-Komponente 14 und auch die übrigen Hochvolt-Komponenten können bei dem Kraftfahrzeug 10 über einen Hochvolt-Zwischenkreis oder kurz Zwischenkreis 16 miteinander elektrisch gekoppelt sein. Der Zwischenkreis 16 kann beispielsweise eine Plusleitung 18 und eine Minusleitung 20 umfassen, wobei die Leitungen 18, 20 jeweils ein Kabel oder eine Stromschiene umfassen können. Der Zwischenkreis 16 kann an einem Anschluss 22 der Spannungsversorgung 12 an diese angeschlossen sein. Der Anschluss 22 kann hierzu einen Pluskontakt 24 und einen Minuskontakt 26 aufweisen. Die Komponente 14 kann über Anschlusskontakte 28 an den Zwischenkreis 16 angeschlossen sein. Beispielsweise können die Anschlusskontakte 28 Schrauben umfassen. Die Komponente 14 kann einen Kondensator 30 aufweisen, bei dem es sich beispielsweise um einen Glättungskondensator oder einen Speicherkondensator handeln kann. Der Kondensator 30 kann eine Kapazität Cx aufweisen. Auch die übrigen (nicht gezeigten) Hochvolt-Komponenten können entsprechende Kondensatoren mit Kapazitäten aufweisen.

Der Zwischenkreis 16 und die Hochvolt-Komponenten (einschließlich der Komponente 14) bilden insgesamt ein Hochvoltnetz 32 des Kraftfahrzeugs 10. Aus Sicht des Anschlusses 22 weist das Hochvoltnetz 32 insgesamt eine Kapazität C auf, die durch die einzelnen Kapazitäten der Komponenten, wie etwa der Kapazität Cx, und einem (in Fig. 1 nicht dargestellten) Zwischenkreiskondensator des Zwischenkreises 16 gebildet sein können. Die Kapazität C kann beispielsweise zwischen 0,1 Millifarad und 10 Millifarad betragen.

Die Spannungsversorgung 12 kann eine Batteriezellen-Reihenschaltung oder einen Batteriezellen-Stapel 34 aufweisen, durch welchen eine Hochvolt-Spannung Ubat erzeugt werden kann. Der Stapel 34 stellt eine Hochvolt-Spannungsquelle dar. Die Hochvolt-Spannung Ubat kann beispielsweise 600 Volt betragen. Um den Stapel 34 mit dem Zwischenkreis 16 zu verbinden, kann die Spannungsversorgung 12 zwei Hauptschalter HS1, HS2 aufweisen.

Bei den Hauptschaltern HS1, HS2 kann es sich beispielsweise um Schütze oder Relais handeln. Durch jeden Hauptschalter HS1, HS2 wird jeweils ein Anschluss 36, 38 des Stapels 34 mit einem der Kontakte 24, 26 des Anschlusses 22 unmittelbar, das heißt ohne ein weiteres Widerstandselement verbunden. Um allerdings den Stapel 34 mit dem Zwischenkreis 26 verbinden zu können, ist eine Vorladung nötig, in welcher bei begrenztem Vorladestrom Iv die Kapazität C des Hochvoltnetzes 32 aufgeladen wird, kann die Spannungsversorgung 12 eine Vorladeschaltung 40 aufweisen. Die Vorladeschaltung 40 kann parallel zu einem der Hauptschalter HS1, HS2 zwischen einen der Anschlüsse 36, 38 des Stapels 34 und ein dem zugehörigen Kontakt 24, 26 des Anschlusses 22 geschaltet sein. Die Vorladeschaltung 40 kann einen Vorladewiderstand R1 und einen zweiten Vorladewiderstand R2 aufweisen. Die Vorladeschaltung 40 kann des Weiteren ein erstes Schaltelement VL1 und ein zweites Schaltelement VL 2 aufweisen. In dem in Fig. 1 gezeigten Beispiel bilden der Vorladewiderstand R1 und das Schaltelement VL1 zusammen einen ersten Schaltungszweig 42, der Vorladewiderstand R2 und das Schaltelement VL2 zusammen einen zweiten Schaltungszweig 44. Der zweite Vorladewiderstand R2 weist einen größeren Widerstandswert als der Vorladewiderstand R1 auf. Die Schaltungszweige 42, 44 sind bei der Vorladeschaltung 40 parallel zueinander geschaltet und verbinden so unabhängig voneinander den Anschluss 36 mit dem Kontakt 24. Beide Vorschaltungszweige 42, 44 überbrücken dabei den Hauptschalter HS1. Die Hauptschalter HS1, HS2 und die Schaltelemente VL1, VL2 sind steuerbar. Sie werden bei dem Kraftfahrzeug 10 beispielsweise durch eine Steuereinrichtung 46 gesteuert, die Bestandteil der Spannungsversorgung 12 sein kann oder, wie in Fig. 1 gezeigt, außerhalb der Spannungsversorgung 12 bereitgestellt sein kann. Die Steuereinrichtung 46 kann beispielsweise einen Mikrocontroller oder ein Steuergerät umfassen.

Die Spannungsversorgung 12 kann eine (nicht dargestellte) Messeinrichtung für elektrische Spannungen aufweisen. Beispielsweise kann die vom Stapel 34 erzeugte Batteriespannung Ubat gemessen werden. Des Weiteren kann beispielsweise die zwischen den Kontakten 24 und 26 am Anschluss 22 anliegende Zwischenkreisspannung Uzk gemessen werden. Die Differenz (Ubat - Uzk) ergibt dann bei geschlossenem Hauptschalter HS2 die über der Vorladespannung 40 abfallende elektrische Spannung.

Zum Starten des Kraftfahrzeugs 10 wird die Spannungsversorgung 12 an das Hochvoltnetz 32 zugeschaltet. Das Startsignal wird von der Steuereinrichtung 36 als ein Zuschaltbefehl Z empfangen. Daraufhin wird durch die Steuereinrichtung 36 der Hauptschalter HS2 geschlossen, so dass ein erster Anschluss 38 des Stapels 34 mit dem Kontakt 26 des Anschlusses 22 elektrisch verbunden ist.

Dann wird durch die Steuereinrichtung 46 durch einen Steuerbefehl das Schaltelement VL2 geschlossen, so dass ein Prüfstrom Ip von dem Anschluss 36 des Stapels 34 über den zweiten Vorladewiderstand R2 zu dem Kontakt 24 des Anschlusses 22 und in das Hochvoltnetz 32 fließt. Der Prüfstrom Ip weist eine Stromstärke auf, die für einen Menschen ungefährlich ist. Durch die Steuereinrichtung 46 wird hierbei beispielsweise die an dem Anschluss 22 messbare Zwischenkreisspannung Uzk gemessen. Die einzelnen Messwerte stellen Prüfwerte dar. Alternativ dazu kann auch beispielsweise die über der Vorladeschaltung 40 abfallende Spannung gemessen werden. Anhand des Prüfwerts oder der Prüfwerte ermittelt die Steuereinrichtung 46, ob ein elektrischer Fehler in dem Hochvoltnetz 32 vorliegt. Wird erkannt, dass kein Fehler vorliegt, wird durch die Steuereinrichtung 46 ein Steuerbefehl zum Schließen des ersten Schaltelements VL1 erzeugt, wodurch ein weiterer Strom, nun durch den Vorladewiderstand VL1 geführt wird. Insgesamt fließt durch die Vorladeschaltung 40 so ein Vorladestrom Iv. Der Vorladestrom Iv bei geschlossenem Schaltelement VL1 kann eine für einen Menschen lebensgefährliche Stromstärke aufweisen. Durch Messen der Zwischenkreisspannung Uzk kann die Steuereinrichtung 46 überprüfen, wann die Kapazität C des Hochvoltnetzes 32 vollständig oder bis auf einen bestimmten Toleranzwert aufgeladen ist. Danach kann der Hauptschalter HS1 geschlossen werden und das Kraftfahrzeug 10 in Betrieb gehen. Dieses Vorladen kann insgesamt weniger als eine Sekunde dauern.

Das zweite Schaltelement VL2 und der zweite Vorladewiderstand R2, durch welche der Prüfstrom Ip gesteuert wird, stellen die erfindungsgemäße Lösung zu der eingangs beschriebenen Aufgabe dar. Um die Wirkungsweise des zweiten Vorladewiderstands R2 zu veranschaulichen, wird im Folgenden die erfindungsgemäße Lösung mit der aus dem Stand der Technik bekannten Lösung verglichen und zum anderen ein Fehlerfall beschrieben.

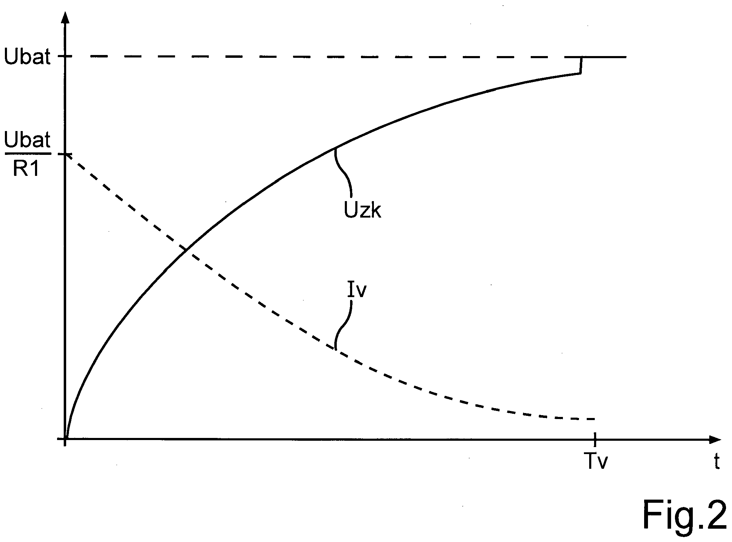

In Fig. 2 ist hierzu ein Diagramm mit zeitlichen Verläufen der Zwischenkreisspannung Uzk und des Vorladestroms Iv über der Zeit t aufgetragen, wie sie sich gemäß dem Stand der Technik ergeben, wenn kein zweiter Vorladewiderstand R2 mit zugehörigem Schaltelement VL2 vorhanden. Dann wird durch eine entsprechende Steuereinrichtung zum Vorladen nach Empfangen des Zuschaltsignals Z gleich das Schaltelement VL1 geschlossen, so dass der Vorladestrom Iv über den Vorladewiderstand R1 mit geringem Widerstand fließt. Der Vorladestrom Iv weist sofort die maximale Stromstärke Ubat/R1 auf, die lediglich durch den Wert des Vorladewiderstands R1 und den Innenwiderstand der Zellen 34 begrenzt ist. Das Vorladen dauert dann eine Vorladezeit Tv, die kleiner als eine Sekunde sein kann.

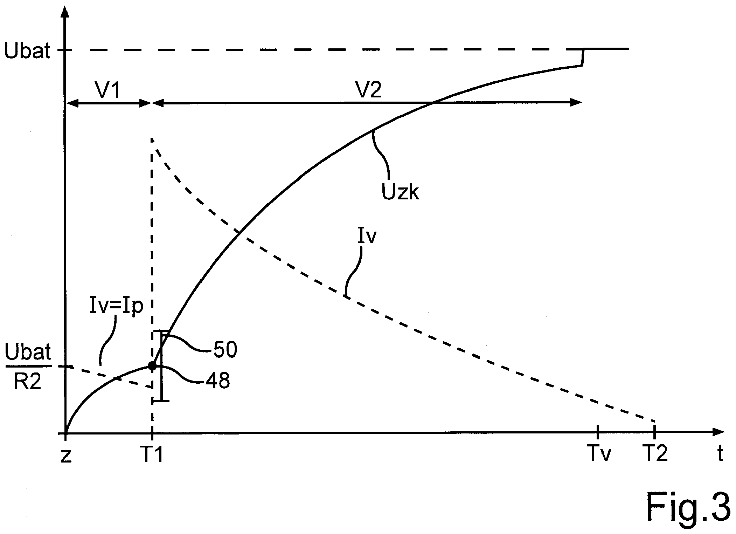

In Fig. 3 sind die Verläufe der Zwischenkreisspannung Uzk und des Vorladestrom Iv veranschaulicht, wie sie sich bei fehlerfreiem Hochvoltnetz 32 ergeben, wenn die Schalter in der beschriebenen Weise durch die Steuereinrichtung 36 angesteuert werden. Nach Empfangen des Zuschaltsignals Z und Schließen des Hauptschalters HS2 wird durch Schließen des Schaltelements VL2 eine erste Vorladephase V1 eingeleitet, in welcher nur der Prüfstrom Ip in das Hochvoltnetz 32 fließt. Hierbei wird die Kapazität des Hochvoltnetzes 32 mit dem Prüfstrom Ip aufgeladen. Der Prüfstrom Ip ist im Wesentlichen durch den zweiten Vorladewiderstand R2 begrenzt, das heißt es ergibt sich ein maximaler Strom von Ubat/R2. Es kann dann vorgesehen sein, nach einer vorgegebenen Prüfzeit T1 zu überprüfen, wie groß die Zwischenkreisspannung Uzk im Anschluss 32 ist. Die Prüfzeit T1 kann beispielsweise in einem Bereich von 50 Millisekunden bis 300 Millisekunden, insbesondere zwischen 50 Millisekunden und 150 Millisekunden liegen.

Der hierbei ermittelte Messwert bildet einen Prüfwert 48. Beispielsweise kann überprüft werden, ob der Prüfwert 48 in einem Sicherheitsintervall 50 liegt. Das Sicherheitsintervall umfasst solche Spannungswerte der Zwischenkreisspannung Uzk, die sich ergeben können, wenn das Hochvoltnetz 32 fehlerfrei ist. Es können sich hierbei mehrere zulässige Werte ergeben, je nachdem, wie viele Hochvoltkomponenten gerade an den Zwischenkreis 16 zugeschaltet sind. Nur wenn der Prüfwert 48 innerhalb des Sicherheitsintervalls 50 liegt, wird nach der Prüfzeit T1 die eigentliche Vorladephase V2 eingeleitet, indem durch die Steuereinrichtung 46 das Schaltelement VL1 geschlossen wird und hierdurch ein sehr viel größerer Vorladestrom Iv ermöglicht wird, indem der kleinere Vorladewiderstand R1 ebenfalls durchströmt wird. Hierbei kann vorgesehen sein, dass das Schaltelement VL2 entweder geschlossen bleibt oder wieder in den nicht-leitenden Zustand überführt wird. Insgesamt kann so nach einer Vorladezeit T2 die Vorladung der Kapazität C beendet sein und der erste Hauptschalter HS1 dann geschlossen werden. In der Fig. 3 ist veranschaulicht, dass die Vorladezeit T2 nur unwesentlich größer ist als die aus dem Stand der Technik bekannte Vorladezeit Tv. In der Vorladephase V1 findet hierbei aber die zusätzliche die Fehlererkennung statt, bevor ein kritisch-großer Vorladestrom in der Vorladephase V2 zum eigentlichen Vorladen der Kapazität C fließt.

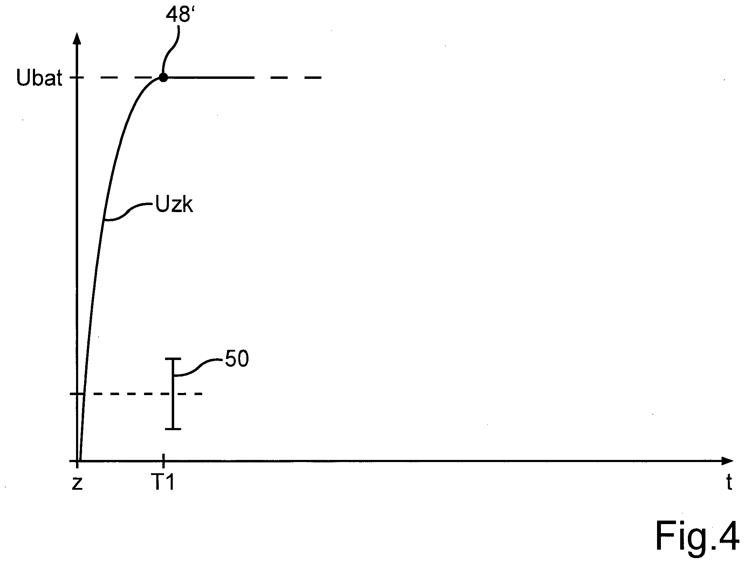

In Fig. 4 ist gezeigt, welcher Verlauf sich für die Zwischenkreisspannung Uzk ergibt, wenn ein Fehler im Hochvoltnetz 32 vorliegt. Beispielsweise kann eine der Schrauben 28 der Komponente 14 sich gelöst haben. Nach der Prüfzeit T1 ergibt sich dann ein Prüfwert 48', der außerhalb des Sicherheitsintervalls 50 liegt. Durch die Steuereinrichtung 46 wird dann nicht mehr der Hauptschalter HS1 geschlossen. Stattdessen kann vorgesehen sein, dass durch die Steuereinrichtung 46 der Stapel 34 wieder vollständig vom Zwischenkreis 16 entkoppelt wird, indem beispielsweise alle Schalter HS1, HS2, VL1, VL2 geöffnet werden.

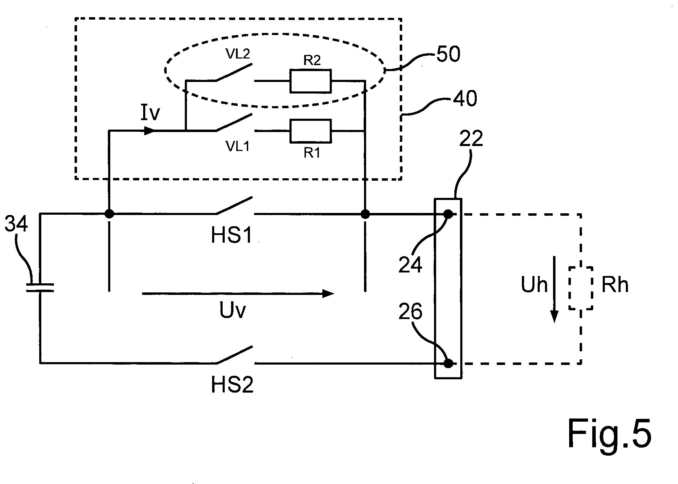

In Fig. 5 ist der Fehlerfall, der der Fig. 4 zugrunde liegt, noch einmal veranschaulicht. In Fig. 5 ist dabei gezeigt, wie sich zwischen den Kontakten 24, 26 des Anschlusses 22 ein Widerstand Rh ergeben kann, wenn eine Person (human) elektrische Leitungen des Hochvoltnetzes 32 berührt.

Der gezeigte Fehlerfall kann zum Dimensionieren des zweiten Vorladewiderstands R2 genutzt werden. R2 muss so groß sein, dass über R2 eine Spannung abfällt, die so groß ist, dass die Restspannung Uh, die am Körper des Menschen abfällt, ungefährlich ist. Beispielsweise kann zugrunde gelegt werden, dass Uh = 60 Volt betragen soll. Beträgt die Spannung Ubat des Zellenstapels 34 beispielsweise 600 Volt (Batteriespannung), muss also gelten: 600 Volt x RH/(RH+R2)=60 Volt. Als Körperwiderstand des Menschen kann beispielsweise RH=1000 Ohm angenommen werden. Mit R2=10000 Ohm=10 Kiloohm ergibt sich dann ein ausreichender Schutz für einen Menschen. Allgemein ist bei der Erfindung insbesondere vorgesehen, dass R2 in einen Bereich von 1000 Ohm bis 100000 Ohm, insbesondere 5000 Ohm bis 20000 Ohm liegt. Dagegen kann der Vorladewiderstand R1 in einem Bereich von 0,5 Ohm bis 1000 Ohm, insbesondere von 2 Ohm bis 100 Ohm liegen.

In Fig. 5 ist noch einmal gezeigt, welcher zusätzliche Schaltungsteil 50 gemäß der Erfindung bereitgestellt wird in der Vorladeschaltung 40.

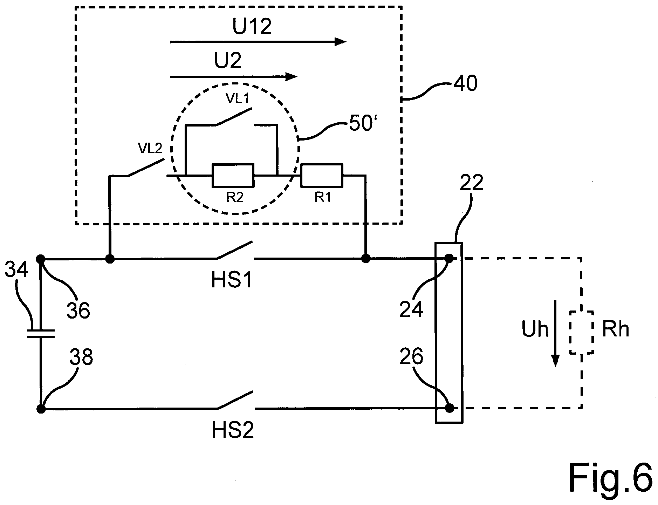

In Fig. 6 ist eine alternative Ausführungsform des erfindungsgemäßen Kraftfahrzeugs gezeigt, bei welchem die Vorladeschaltung 40' eine Reihenschaltung aus dem Vorladewiderstand R1 und dem zweiten Vorladewiderstand R2 umfasst. Der Übersichtlichkeit halber sind in Fig. 6 funktionsgleiche Elemente mit denselben Bezugszeichen versehen wie in den vorangegangenen Figuren. Bezüglich eines Menschen, welcher im Hochvoltnetz 32 den beschriebenen Fehlerfall verursacht, verhält sich die in Fig. 6 gezeigte Schaltung genauso sicher wie die Schaltung von Fig. 5. Zum Prüfen des Hochvoltnetzes 32 wird durch eine Steuereinrichtung bei der Schaltung gemäß Fig. 6 zunächst nur das zweite Schaltelement VL2 geschlossen, nachdem der Hauptschalter HS2 den ersten Anschluss 38 mit dem Kontakt 26 des Anschlusses 22 gekoppelt hat. Als Gesamtwiderstand, durch welchen der Prüfstrom dann begrenzt wird, ergibt sich die Reihenschaltung R1+R2. Zum Beenden der ersten Vorladephase V1, muss dann noch das erste Schaltelement VL1 in den leitenden Zustand geschaltet werden. Vorteil der in Fig. 6 gezeigten Schaltung ist, dass das Schaltelement VL1 keine galvanische Trennung zwischen dem Zellstapel 34 und dem Anschluss 22 sicherstellen muss. Es reicht aus, wenn das zweite Schaltelement VL2 ein galvanisch trennendes Schaltelement ist, also etwa ein Schaltschütz oder ein Relais. Das Schaltelement VL1 kann dagegen ein Halbleiterschaltelement sein.

Zur Erhöhung der Sicherheit von Hochvoltfahrzeugen für Personen, insbesondere Werkstattmitarbeiter und Produktionsmitarbeiter, wird durch die Erfindung also Folgendes vorgeschlagen, wie durch die Beispiele veranschaulicht ist:
Es wird folgender Ablauf beim Zuschalten der Spannungsversorgung 12 an das Hochvoltnetz 32 sichergestellt.
   1. Schließen des parallelen Vorladezweiges mit großem Widerstand, so dass nur ein ungefährlicher Körperstrom fließen kann.
   2. Wenn Diagnose erfolgt ist, das Bordnetz angeschlossen ist, wird der eigentliche Vorladezweig mit einem kleinen Widerstand zugeschaltet, um den Zwischenkreis schnell zu laden und das Hochvolt-System zu aktivieren.

Die Diagnose erfolgt dabei folgendermaßen: Bei einem nicht vorhandenen Zwischenkreiskondensator (Kapazität C) wird die Hochvoltspannung sofort am Bordnetz aufgebaut. Diese Spannung ist allerdings ungefährlich, da der große Vorladewiderstand einen potentiellen Körperstrom auf unkritische Werte begrenzt (in der Regel kleiner als 10 Milliampere). Da die Diagnose sehr schnell umsetzbar ist (wenige Millisekunden), wird zur Aktivierung des Hochvolt-Systems und damit die Fahrbereitschaft des Kraftfahrzeugs kaum verzögert erreicht. Mit minimaler Verzögerung der Vorladezeit erreicht die Erfindung somit ein wesentlich höheres Sicherheitsniveau.

## Patentansprüche

1. Verfahren zum Steuern einer Zuschaltung einer Hochvolt-Spannungsquelle (34) eines Kraftfahrzeugs (10) an ein Hochvoltnetz (32) des Kraftfahrzeugs (10), indem durch eine Steuereinrichtung (46) des Kraftfahrzeugs (10) nach Empfangen eines Zuschaltbefehls (Z) zunächst zumindest ein Prüfwert (48, 48') für eine elektrische Betriebsgröße (Uzk) des Hochvoltnetzes (32) ermittelt wird, die von einer an einem Anschluss (22) der Hochvolt-Spannungsquelle (12) an das Hochvoltnetz (32) tatsächlich wirksamen Kapazität (C) abhängig ist, und nur, falls der zumindest eine Prüfwert (48) eine vorbestimmte Sicherheitsbedingung (50) erfüllt, ein Vorladestrom (Iv) der Hochvolt-Spannungsquelle (34) zum Aufladen einer Kapazität des Hochvoltnetzes (32) über einen ersten, den Vorladestrom (Iv) begrenzenden Vorladewiderstand (R1) zu dem Anschluss (22) hin und in das Hochvoltnetz (32) geführt wird und andernfalls (50') der Vorladestrom (Iv) blockiert wird,
**dadurch gekennzeichnet, dass**
zum Ermitteln des zumindest einen Prüfwerts (48, 48') ein Prüfstrom (Ip) aus der Hochvolt-Spannungsquelle (34) über einen zweiten Vorladewiderstand (R2) zum Anschluss (22) geführt wird, wobei der zweite Vorladewiderstand (R2) einen größeren Widerstandswert als der erste Vorladewiderstand (R1) aufweist, und als der zumindest eine Prüfwert (48, 48') jeweils ein Spannungswert oder ein Stromstärkewert ermittelt wird und wobei eine durch den Prüfstrom (Ip) bewirkte erste Vorladung (V1) der tatsächlich wirksamen Kapazität (C) bewirkt wird und anhand des zumindest einen Prüfwerts (48, 48') die erste Vorladung (V1) überwacht wird.

2. Verfahren nach Anspruch 1, wobei als Sicherheitsbedingung (50) überprüft wird, ob der zumindest eine Prüfwert (48, 48') jeweils innerhalb eines Sollwert-Intervalls liegt, wobei das Sollwert-Intervalls aus zumindest einem Sollwert gebildet ist, wie er sich ergibt, wenn die tatsächlich wirksame Kapazität (C) einer bestimmungsgemäßen Kapazität des Hochvoltnetzes (32) entspricht.

3. Verfahren nach Anspruch 1 oder 2, wobei durch den zweiten Vorladewiderstand (R2) der Prüfstrom (Ip) auf einen Stromstärkewert begrenzt wird, der kleiner als ein für einen Menschen bei gegebener elektrischer Hochvolt-Spannung (Ubat) der Hochvolt-Spannungsquelle (34) gefährlicher Körperstrom ist.

4. Kraftfahrzeug
- mit einem Hochvoltnetz (32) und
- mit einer über einen Anschluss an das Hochvoltnetz (32) angeschlossenen Hochvolt-Spannungsquelle (34) und
- mit einer Vorladeschaltung (40, 40'), welche ein erstes steuerbares Schaltelement (VL1) aufweist, das dazu ausgelegt ist, im elektrisch leitenden Zustand die Hochvolt-Spannungsquelle (34) über einen ersten Vorladewiderstand (R1) mit dem Anschluss (22) zu verbinden, und
- mit einer Steuereinrichtung (46), die dazu ausgelegt ist, in Abhängigkeit von einem Zuschaltbefehl (Z) ein erstes Steuersignal für das erste Schaltelement (VL1) zu erzeugen,
**dadurch gekennzeichnet, dass**
die Vorladeschaltung (40, 40') einen zweiten Vorladewiderstand (R2) aufweist, welcher einen größeren Widerstandswert als der erste Vorladewiderstand (R1) aufweist, und ein zweites Schaltelement (VL2) der Vorladeschaltung dazu ausgelegt ist, im elektrisch leitenden Zustand einen Prüfstrom (Ip) aus der Hochvolt-Spannungsquelle (34) über den zweiten Vorladewiderstand (R2) zu dem Anschluss (22) zu führen und die Steuereinrichtung dazu ausgelegt ist, ein Verfahren nach einem der vorhergehenden Ansprüche durchzuführen und das erste Steuersignal nur zu erzeugen, falls der zumindest eine Prüfwert (48, 48') die vorbestimmte Sicherheitsbedingung (50) erfüllt.

5. Kraftfahrzeug (10) nach Anspruch 4, wobei das erste Schaltelement (VL1) dazu ausgelegt ist, im elektrisch leitenden Zustand einen von der Hochvolt-Spannungsquelle (34) zu dem Anschluss (22) fließenden Strom (Iv) größtenteils oder vollständig an dem zweiten Vorladewiderstand (R2) vorbeizuführen.

6. Kraftfahrzeug nach Anspruch 4 oder 5, wobei das erste Schaltelement (VL1) und der erste Vorladewiderstand (R1) einen ersten Schaltungszweig (42) und das zweite Schaltelement (VL2) und der zweite Vorladewiderstand (R2) einen zweiten Schaltungszweig (44) bilden, wobei der erste und der zweite Schaltungszweig (42, 44) die Hochvolt-Spannungsquelle (34) mit dem Anschluss (22) unabhängig voneinander koppeln.

7. Kraftfahrzeug nach Anspruch 4 oder 5, wobei der erste Vorladewiderstand (R1) und der zweite Vorladewiderstand (R2) gemeinsam über das zweite Schaltelement (VL2) mit der Hochvolt-Spannungsquelle (34) oder dem Anschluss gekoppelt sind.

8. Kraftfahrzeug nach einem der Ansprüche 4 bis 7, wobei die Steuereinrichtung (46) dazu ausgelegt ist, in Abhängigkeit von dem Zuschaltbefehl (Z) zunächst durch Erzeugen eines zweiten Steuersignals das zweite Schaltelement (VL2) der Vorladeschaltung (40, 40') in einen elektrisch leitenden Zustand zu schalten, ohne hierbei das erste Steuersignal zu erzeugen, und hierdurch einen Prüfstrom (Ip) aus der Hochvolt-Spannungsquelle (34) über den zweiten Vorladewiderstand (R2) zu dem Anschluss zu führen.

## Claims

1. Method for controlling a connection of a high voltage source (34) of a motor vehicle (10) to a high voltage network (32) of the motor vehicle (10) in that, firstly, at least one test value (48, 48') for an electrical operating variable (Uzk) of the high voltage network (32) is determined by a control device (46) of the motor vehicle (10) following reception of a connection command (Z), said operating variable being dependent on a capacitance (C) actually effective at a connection (22) of the high voltage source (12) to the high voltage network (32), and only if the at least one test value (48) fulfils a predefined safety condition (50) is a precharge current (Iv) of the high voltage source (34) passed, via a first precharge resistor (R1) which limits the precharge current (Iv), to the connection (22) and into the high voltage network (32) in order to charge up a capacitance of the high voltage network (32), and otherwise (50') the precharge current (Iv) is blocked. **characterised in that**
in order to determine the at least one test value (48, 48') a test current (Ip) is passed from the high voltage source (34) to the connection (22) via a second precharge resistor (R2), wherein the second precharge resistor (R2) has a greater resistance value than the first precharge resistor (R1), and, as the at least one test value (48, 48'), a voltage value or a current strength value is determined, and wherein a first precharge (V1) of the actually effective capacitance (C) caused by the test current (Ip) is effected and the first precharge (V1) is monitored on the basis of the at least one test value (48, 48').

2. Method according to Claim 1, wherein as safety condition (50) it is checked whether the at least one test value (48, 48') in each case lies within a set point range, said set point range being formed of at least one set point such as results if the actually effective capacitance (C) corresponds to a desired capacitance of the high voltage network (32).

3. Method according to Claim 1 or 2, wherein the test current (Ip) is limited through the second precharge resistor (R2) to a current strength value which is less than a shock current hazardous to a person at the given electrical high voltage (Ubat) of the high voltage source (34).

4. Motor vehicle
- with a high voltage network (32) and
- with a high voltage source (34) connected to the high voltage network (32) via a connection and
- with a precharge circuit (40, 40') which has a first controllable switching element (VL1) which is designed, in the electrically conductive state, to connect the high voltage source (34) with the connection (22) via a first precharge resistor (R1),
and
- with a control device (46) which is designed, depending on a connection command (Z), to generate a first control signal for the first switching element (VL1),
**characterised in that**
the precharge circuit (40, 40') has a second precharge resistor (R2) which has a greater resistance value than the first precharge resistor (R1) and a second switching element (VL2) of the precharge circuit is designed, in the electrically conductive state, to pass a test current (Ip) from the high voltage source (34) to the connection (22) via the second precharge resistor (R2), and the control device is designed to carry out a method according to any one of the preceding claims and only to generate the first control signal if the at least one test value (48, 48') fulfils the predetermined safety condition (50).

5. Motor vehicle (10) according to Claim 4, wherein the first switching element (VL1) is designed, in the electrically conductive state, to bypass a current (Iv) flowing from the high voltage source (34) to the connection (22), for the most part or completely, past the second precharge resistor (R2).

6. Motor vehicle according to Claim 4 or 5, wherein the first switching element (VL1) and the first precharge resistor (R1) form a first circuit branch (42) and the second switching element (VL2) and the second precharge resistor (R2) form a second circuit branch (44), wherein the first and the second circuit branch (42, 44) couple the high voltage source (34) with the connection (22) independently of each other.

7. Motor vehicle according to Claim 4 or 5, wherein the first precharge resistor (R1) and the second precharge resistor (R2) are jointly coupled with the high voltage source (34) or the connection via the second switching element (VL2).

8. Motor vehicle according to any one of Claims 4 to 7, wherein the control device (46) is designed, depending on the connection command (Z), firstly, by generating a second control signal, to switch the second switching element (VL2) of the precharge circuit (40, 40') into an electrically conductive state without thereby generating the first control signal, and as a result to pass a test current (Ip) from the high voltage source (34) to the connection via the second precharge resistor (R2).

## Revendications

1. Procédé de commande d'un branchement d'une source de haute tension (34) d'un véhicule automobile (10) sur un réseau à haute tension (32) du véhicule automobile (10), selon lequel au moins une valeur de contrôle (48, 48') pour une grandeur de fonctionnement (Uzk) électrique du réseau à haute tension (32) est d'abord déterminée par un dispositif de commande (46) du véhicule automobile (10) après la réception d'une instruction de branchement (Z), laquelle grandeur de fonctionnement dépend d'une capacité (C) effectivement efficace à une borne (22) de la source de haute tension (12) sur le réseau à haute tension (32), et, seulement si l'au moins une valeur de contrôle (48) satisfait une condition de sécurité (50) prédéterminée, on conduit un courant de précharge (Iv) de la source de haute tension (34) pour charger une capacité du réseau à haute tension (32) par l'intermédiaire d'une première résistance de précharge (R1), limitant le courant de précharge (Iv), jusqu'à la borne (22) et jusque dans le réseau à haute tension (32) et, sinon (50'), on bloque le courant de précharge (Iv),
**caractérisé en ce que**, pour déterminer l'au moins une valeur de contrôle (48, 48'), on conduit un courant de contrôle (Ip) de la source de haute tension (34) par l'intermédiaire d'une deuxième résistance de précharge (R2) jusqu'à la borne (22), la deuxième résistance de précharge (R2) ayant une valeur de résistance plus grande que la première résistance de précharge (R1), et on détermine comme l'au moins une valeur de contrôle (48, 48') à chaque fois une valeur de tension ou une valeur d'intensité de courant, une première précharge (V1), provoquée par le courant de contrôle (Ip), de la capacité (C) effectivement efficace étant provoquée et la première précharge (V1) étant surveillée à l'aide de l'au moins une valeur de contrôle (48, 48').

2. Procédé selon la revendication 1, selon lequel on vérifie comme condition de sécurité (50) si l'au moins une valeur de contrôle (48, 48') se trouve à chaque fois à l'intérieur d'un intervalle de valeur de consigne, l'intervalle de valeur de consigne étant formé à partir d'au moins une valeur de consigne telle qu'elle résulte lorsque la capacité (C) effectivement efficace correspond à une capacité conventionnelle du réseau à haute tension (32).

3. Procédé selon la revendication 1 ou 2, selon lequel le courant de contrôle (Ip) est limité par la deuxième résistance de précharge (R2) à une valeur d'intensité de courant qui est inférieure à un courant corporel dangereux pour un homme pour une haute tension électrique donnée (Ubat) de la source de haute tension (34).

4. Véhicule automobile
- avec un réseau à haute tension (32) et
- avec une source de haute tension (34) raccordée au réseau de haute tension (32) par l'intermédiaire d'une borne et
- avec un circuit de précharge (40, 40') qui comporte un premier élément commutateur (VL1) commandable qui est conçu pour, à l'état électriquement conducteur, relier la source de haute tension (34) par l'intermédiaire d'une première résistance de précharge (R1) à la borne (22) et
- avec un dispositif de commande (46) qui est conçu pour, en fonction d'une instruction de branchement (Z), produire un premier signal de commande pour le premier élément commutateur (VL1),
**caractérisé en ce que** le circuit de précharge (40, 40') comporte une deuxième résistance de précharge (R2) qui a une plus grande valeur de résistance que la première résistance de précharge (R1) et **en ce qu'**un deuxième élément commutateur (VL2) du circuit de précharge est conçu pour, à l'état électriquement conducteur, conduire un courant de contrôle (Ip) de la source de haute tension (34) par l'intermédiaire de la deuxième résistance de précharge (R2) jusqu'à la borne (22) et **en ce que** le dispositif de commande est conçu pour mettre en oeuvre un procédé selon l'une des revendications précédentes et pour produire le premier signal de commande seulement si l'au moins une valeur de contrôle (48, 48') satisfait la condition de sécurité (50) prédéterminée.

5. Véhicule automobile (10) selon la revendication 4, dans lequel le premier élément commutateur (VL1) est conçu pour, à l'état électriquement conducteur, détourner majoritairement ou complètement de la deuxième résistance de précharge (R2) un courant (Iv) passant de la source de haute tension (34) à la borne (22).

6. Véhicule automobile selon la revendication 4 ou 5, dans lequel le premier élément commutateur (VL1) et la première résistance de précharge (R1) forment une première branche de circuit (42) et le deuxième élément commutateur (VL2) et la deuxième résistance de précharge (R2) forment une deuxième branche de circuit (44), la première et la deuxième branche de circuit (42, 44) couplant indépendamment l'une de l'autre la source de haute tension (34) à la borne (22).

7. Véhicule automobile selon la revendication 4 ou 5, dans lequel la première résistance de précharge (R1) et la deuxième résistance de précharge (R2) sont couplées conjointement par l'intermédiaire du deuxième élément commutateur (VL2) à la source de haute tension (34) ou à la borne.

8. Véhicule automobile selon l'une des revendications 4 à 7, dans lequel le dispositif de commande (46) est conçu pour, en fonction de l'instruction de branchement (Z), commuter d'abord le deuxième élément commutateur (VL2) du circuit de précharge (40, 40') dans un état électriquement conducteur en produisant un deuxième signal de commande, sans produire pour autant le premier signal de commande, et pour conduire ainsi un courant de contrôle (Ip) de la source de haute tension (34) par l'intermédiaire de la deuxième résistance de précharge (R2) jusqu'à la borne.
